# EUROPEAN PATENT APPLICATION

(11) **EP 4 827 019 A1**
(43) Date of publication of application: **21.10.2026**
(21) Application number: 24910132.0
(22) Date of filing: 10.10.2024
(51) Int. Cl.: H04B 17/20, H04B 7/0452

(54) **SIGNAL DETECTION METHOD AND APPARATUS, RECEIVER, AND COMPUTER READABLE STORAGE MEDIUM**

(30) Priority: 26.12.2023 CN 202311812436
(71) Applicant: Sanechips Technology Co., Ltd., Shenzhen, Guangdong 518055 (CN)
(72) Inventor: WANG, Xiyu, Shenzhen, Guangdong 518055 (CN); WU, Gang, Shenzhen, Guangdong 518055 (CN)
(74) Representative: Canzler & Bergmeier Patentanwälte Partnerschaft mbB
(86) International application number: PCT/CN2024/123918
(87) International publication number: WO 2025/139190

(57) **Abstract**

The present application provides a signal detection method and apparatus for a multiple input and multiple output system, a receiver, and a computer readable storage medium. The method comprises: receiving signals from a number Q of transmitting ports by a number P of receiving ports, P and Q both being positive integers; when a number L is less than or equal to the lower value among P and Q, determining a number J of receiving ports having lower received signal power among the P receiving ports, or a number K of transmitting ports having lower received signal power among the Q transmitting ports, L being the number of space division multiplexing layers of the received signals, J ≤ P-L and K ≤ Q-L; determining a degree of power imbalance of each receiving port among the J receiving ports, or a degree of power imbalance of each transmitting port among the K transmitting ports; performing signal detection processing on the received signals, the signal detection processing comprising signal ignore processing.

## Description

### CROSS REFERENCE TO RELATED APPLICATIONS

The present application claims the priority to Chinese Patent Application No. 202311812436.6 filed on December 26, 2023, the contents of which are incorporated herein by reference in their entirety.

### TECHNICAL FIELD

The present disclosure relates to Multiple Input Multiple Output (MIMO) technology in the field of wireless communication, and in particular, to a signal detection method and apparatus for a MIMO system, a receiver, and a computer-readable storage medium.

### BACKGROUND

Multiple Input Multiple Output (MIMO) is one of the key technologies in wireless communication systems for improving system capacity and signal transmission quality. The application of MIMO on physical channels is specified in both 3GPP and WIFI protocols. In general, in provisions or specifications regarding MIMO in the 3GPP and WIFI protocols, different ports of transmit antennas are equal in transmit power, that is, the transmit power is balanced. Correspondingly, the receivers are also typically designed for such power-balanced conditions.

However, in actual wireless communication systems, the signal power of signals arriving at the receiver from different transmission ports of the MIMO system is often unbalanced. This is primarily because that the wireless fading channels experienced between different transmission ports and different receiving antennas in the wireless propagation environment are different, the radio frequency channels of the transmitter or the receiver are non-ideal, and signals from some transmit ports to different receiving antennas may be physically blocked, etc.

The formation process of signals of the transmitter requires precoding processing, encompassing precoding modes for single transmission port, spatial multiplexing, and transmit diversity. In 3GPP, the transmit diversity relies on Space Frequency Block Coding (SFBC) based on adjacent subcarriers, while in Wi-Fi, the transmit diversity relies on Space-Time Block Coding (STBC) based on adjacent symbols. The receiver needs to adopt a corresponding detection method to process the transmitted signal according to the precoding mode. When the power imbalance degree from different transmit ports to different receiving channels corresponding to the receiver reaches a certain level, continuing to use conventional receiver detection methods designed for power-balanced conditions will affect detection performance.

### SUMMARY

The present disclosure provides a signal detection method and apparatus for a MIMO system, a receiver, and a computer-readable storage medium.

In one aspect, an embodiment of the present disclosure provides a signal detection method for a multiple input multiple output (MIMO) system, including: receiving signals from Q transmit ports by P receive ports, where P and Q are both positive integers; in a case where L is less than or equal to the smaller one of P and Q, determining J receive ports having lower received signal power among the P receive ports or K transmit ports having lower received signal power among the Q transmit ports, where L is the number of spatial multiplexing layers of the received signals, J≤P-L, and K≤Q-L; determining a power imbalance degree of each receive port of the J receive ports or a power imbalance degree of each transmit port of the K transmit ports; and performing signal detection processing on the received signals, wherein the signal detection processing includes signal ignoring processing, which includes at least one of: ignoring signals which are received by a receive port, among the J receive ports, whose power imbalance degree is greater than a first preset threshold; or ignoring signals which are received by the P receive ports and transmitted by a transmit port, among the K transmit ports, whose power imbalance degree is greater than a second preset threshold.

In another aspect, an embodiment of the present disclosure further provides a signal detection apparatus for a MIMO system in which signals from Q transmit ports are received by P receive ports, where P and Q are both positive integers, wherein the signal detection apparatus includes: a power comparison module, which is configured to determine J receive ports having lower received signal power among the P receive ports or K transmit ports having lower received signal power among the Q transmit ports, where L is a number of spatial multiplexing layers of the received signals, J≤P-L, and K≤Q-L; an imbalance-degree calculation module, which is configured to determine a power imbalance degree of each receive port of the J receive ports or a power imbalance degree of each transmit port of the K transmit ports; and a signal detection processing module, which is configured to perform signal detection processing on the received signals, wherein the signal detection processing includes signal ignoring processing, and the signal ignoring processing includes at least one of: ignoring signals which are received by a receive port, among the J receive ports, whose power imbalance degree is greater than a first preset threshold; or ignoring signals which are received by the P receive ports and transmitted by a transmit port, among the K transmit ports, whose power imbalance degree is greater than a second preset threshold.

In yet another aspect, the present disclosure further provides a receiver, including the above signal detection apparatus for a MIMO system.

In still another aspect, an embodiment of the present disclosure further provides a computing device, including a processor, a memory, and a computer program which is stored in the memory and executable on the processor, and the processor, when executing the computer program, implements the above signal detection method.

In still another aspect, an embodiment of the present disclosure further provide a computer-readable storage medium, computer-executable instructions which, when executed by one or more processors, implement the above signal detection method.

### BRIEF DESCRIPTION OF DRAWINGS

FIG. 1 is a schematic diagram of the hardware structure of a receiver for a signal detection method for a MIMO system according to an embodiment of the present disclosure;
FIG. 2 is a schematic flowchart illustrating a signal detection method for a MIMO system according to an embodiment of the present disclosure;
FIG. 3 is a schematic flowchart illustrating a signal detection method in a case where the precoding mode is transmit diversity and there is redundancy in transmit ports according to another embodiment of the present disclosure;
FIG. 4 is a schematic block diagram of a signal detection apparatus for a MIMO system according to an embodiment of the present disclosure;
FIG. 5 is a signal detection performance diagram of a signal detection method according to an embodiment of the present disclosure in a case where the precoding mode is transmit diversity; and
FIG. 6 is a schematic flowchart illustrating processing of received signals by a receiver according to an embodiment of the present disclosure.

### DETAIL DESCRIPTION OF EMBODIMENTS

Embodiments of the present disclosure will be described in detail below with reference to the accompanying drawings in conjunction with embodiments.

It should be noted that the terms "first", "second" and the like in the description, claims and drawings of the present disclosure are used for distinguishing similar objects, but not necessarily for describing a particular order or sequence. In addition, all the following embodiments can be combined with each other and refer to each other if no conflict is incurred.

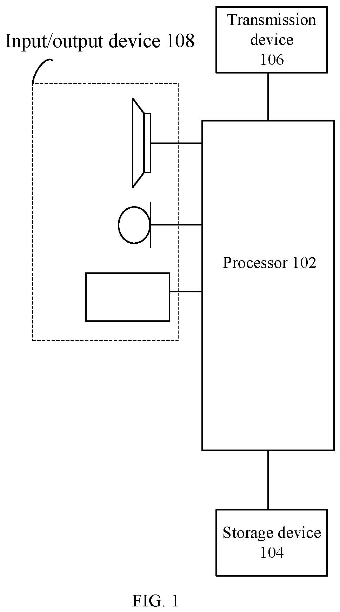

The method embodiments in the embodiments of the present disclosure may be executed in a receiving-end device (or referred to as "a receiving end" or "a receiver", etc.) of a MIMO system. FIG. 1 is a block diagram of the hardware structure of a receiver for a signal detection method for a MIMO system according to an embodiment of the present disclosure. As shown in FIG. 1, the receiver may include one or more processors 102 (merely one processor 102 is shown in FIG. 1, and the processor 102 may include, but is not limited to, a processing device such as a microprocessor (e.g., a Microcontroller Unit (MCU)) or a programmable logic device (e.g., a Field Programmable Gate Array (FPGA))), and a memory 104 for storing data. The receiver may further include a transmission device 106 for performing communication functions and an input/output device 108. It should be understood by those of ordinary skill in the art that the structure shown in FIG. 1 is merely illustrative and is not intended to limit the structure of the receiver. For example, the receiver may include more or fewer components than those shown in FIG. 1, or may have a configuration different from that shown in FIG. 1.

The memory 104 may be configured to store computer programs, such as software programs and modules of application software. For example, the computer programs may include a computer program corresponding to the signal detection method provided in the embodiments of the present disclosure. By executing the computer programs stored in the memory 104, the processor 102 performs various functional applications and data processing, that is, implementing the above signal detection method. The memory 104 may include a high-speed random access memory, and may also include a non-transitory memory, such as one or more magnetic memories, flash memories, or other non-transitory solid-state memories. In some examples, the memory 104 may further include a memory remotely arranged relative to the processor 102, and the remote memory may be connected to a mobile terminal via a network. The examples of the network include, but are not limited to, the Internet, an intranet, a local area network, a mobile communication network, and the combinations thereof.

The transmission device 106 is configured to receive or transmit data via a network. The specific examples of the network may include a wireless network provided by a communication provider. In one example, the transmission device 106 includes a Network Interface Controller (NIC), which may be connected to other network devices via a base station to communicate with the Internet. In another example, the transmission device 106 may be a Radio Frequency (RF) module, which is configured to communicate with the Internet in a wireless manner. The transmission device 106 may include a transmit port and/or a receive port described blow.

In order to solve the problem that conventional receiver detection methods lead to poor detection performance when the power balance degree at transmit ports and receiving channels exceeds a threshold, an embodiment of the present disclosure provides a signal detection method for a MIMO system. When the power imbalance degree from different transmit ports to different receiving channels corresponding to the receiver reaches a certain level, the received signal detection method for the receiver can be adjusted to solve the existing problem and improve detection performance of the receiver. The method is applicable to cases of single-port, spatial multiplexing, and transmit diversity under 3GPP NR/LTE-A, and is also applicable to similar scenarios in next-generation wireless communication networks. The transmitting end may be a base station (gNB), a relay (Relay), or various gateways (APs). The method is also applicable to the case of transmit diversity in the wireless network communication technology where the transmitting end may be a terminal device (STA). The signal detection method may be performed by a receiving-end device.

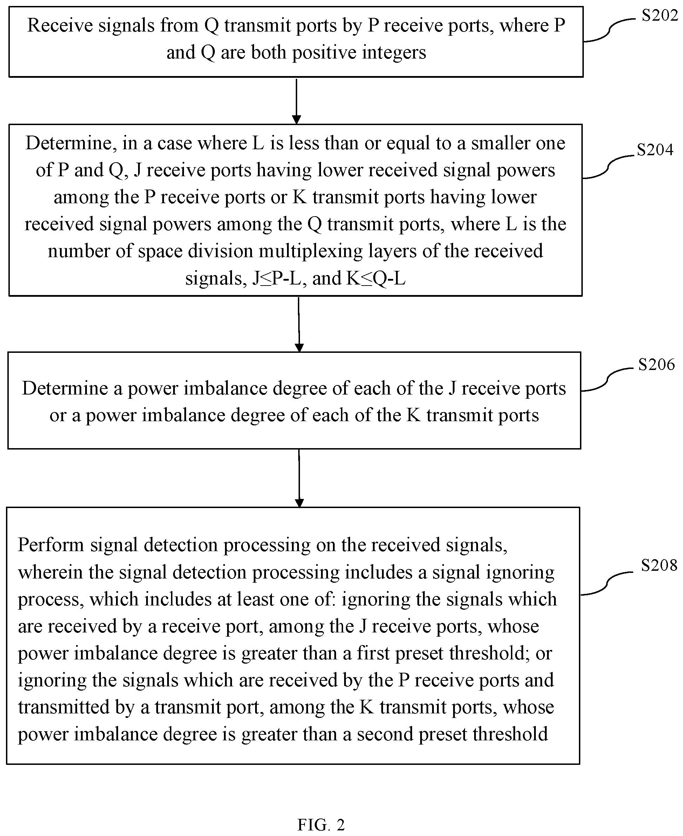

FIG. 2 is a schematic flowchart illustrating a signal detection method for a MIMO system according to an embodiment of the present disclosure, and the method may include the following operations S202 to S208.

At operation S202, receiving signals from Q transmit ports by P receive ports, where P and Q are both positive integers.

In the embodiments of the present disclosure, the receive ports (i.e., receiving channels) include components in the receiver for tracking, processing, and measuring signals, and may be constituted of radio components, digital circuits, and dedicated software; and the transmit ports (i.e., transmit antennas) include electronic components having a function of converting RF signal current into spatial electromagnetic waves, and the signals received by the receive ports come from the transmit ports of a transmitting-end device.

At operation S204, determining, in a case where L is less than or equal to the smaller one of P and Q, J receive ports having lower received signal power among the P receive ports or K transmit ports having lower received signal power among the Q transmit ports, where L is the number of spatial multiplexing layers of the received signals, J≤P-L, and K≤Q-L.

Q may be the number of transmit antenna ports, i.e., the number of transmit ports; and P may be the number of receive antennas, i.e., the number of receive ports.

L being less than or equal to the smaller one of P and Q means that there are redundant transmit and/or receive ports, which makes it feasible to ignore signals from certain transmit port and/or receive ports.

In an exemplary embodiment, the received signal power of the P receive ports and the Q transmit ports may be determined as follows: for each receive port of the P receive ports, calculating the total power of the signals received by the receive port from the Q transmit ports as the received signal power of the receive port; and for each transmit port of the Q transmit ports, calculating the total power of the signals received by the P receive ports from the transmit port as the received signal power of the transmit port.

In an exemplary embodiment, the Reference Signal Receive Power (RSRP) of the received signals may be used as the power of the received signals. Alternatively, the received signal power of the receive ports and the transmit ports may be determined in other ways, which is not limited herein. For example, the received signal power of the receive ports or the transmit ports may be determined based on the maximum of the power of the respective received signals.

In an exemplary embodiment, in a case where a precoding mode of the received signals is single-port or spatial multiplexing, the determining the J receive ports having the lower received signal power among the P receive ports at operation S204 includes: comparing the received signal power of the P receive ports, and sorting the P receive ports in descending order of received signal power; and determining the last J receive ports in the sorted order as the J receive ports having the lower received signal power among the P receive ports. The determining the K transmit ports having the lower received signal power among the Q transmit ports at operation S204 includes: comparing the received signal power of the Q transmit ports, and sorting the Q transmit ports in descending order of received signal power; and determining the last K transmit ports in the sorted order as the K transmit ports having the lower received signal power among the Q transmit ports.

In another exemplary embodiment, in a case where the precoding mode of the received signals is transmit diversity, L=1, the Q transmit ports include Q/2 first-type transmit ports and Q/2 second-type transmit ports; the m^{th} first-type transmit port and the m^{th} second-type respectively transmit port transmit signal s₂ₘ₋₂ and signal $- {s}_{2 m - 1}^{∗}$ on the (Q·i+2m-2)^{th} subcarrier, and respectively transmit signal s₂ₘ₋₁ and signal ${s}_{2 m - 2}^{∗}$ on the (Q·i+2m-1)^{th} subcarrier, wherein the m^{th} first-type transmit port and the m^{th} second-type transmit port are regarded as the m^{th} group of transmit ports, m=1, ..., Q/2, and i is a positive integer. Herein, the determining the J receive ports having the lower received signal power among the P receive ports at operation S204 includes: comparing the received signal power of the P receive ports, and sorting the P receive ports in descending order of received signal power; and determining the last J receive ports in the sorted order as the J receive ports having the lower received signal power among the P receive ports. The determining the K transmit ports having the lower received signal power among the Q transmit ports at operation S204 includes: for the m^{th} group of transmit ports, when the received signal power of the m^{th} first-type transmit port is greater than that of the m^{th} second-type transmit port, determining the m^{th} second-type transmit port as one of the K transmit ports; and for the m^{th} group of transmit ports, when the received signal power of the m^{th} second-type transmit port is greater than that of the m^{th} first-type transmit port, determining the m^{th} first-type transmit port as one of the K transmit ports.

At operation S206, determining a power imbalance degree of each of the J receive ports or a power imbalance degree of each of the K transmit ports.

In an exemplary embodiment, the determining the power imbalance degree of each of the J receive ports at operation S206 includes: selecting all or part of the receive ports from the P receive ports other than the J receive ports as comparison receive ports; for each of the J receive ports, calculating the ratio of the received signal power of the receive port to the received signal power of each of the comparison receive ports, and taking the minimum ratio as the power imbalance degree of the receive port. The determining the power imbalance degree of each of the K transmit ports includes: selecting all or part of the transmit ports from the Q transmit ports other than the K transmit ports as comparison transmit ports; and for each of the K transmit ports, calculating the ratio of the received signal power of the transmit port to the received signal power of each of the comparison transmit ports, and taking the minimum ratio as the power imbalance degree of the transmit port.

In an exemplary embodiment, when the precoding transmission mode of the received signals is single-port or spatial multiplexing, all the receive ports from the P receive ports other than the J receive ports are selected as the comparison receive ports when determining the power imbalance degree of each of the J receive ports; and all the transmit ports from the Q transmit ports other than the K transmit ports are selected as the comparison receive ports when determining the power imbalance degree of each of the K transmit ports.

In another exemplary embodiment, when the precoding transmission mode of the received signals is transmit diversity, the determining the power imbalance degree of each of the J receive ports includes: selecting all the receive ports from the P receive ports other than the J receive ports as the comparison receive ports.

In an exemplary embodiment, the determining the power imbalance degree of each of the K transmit ports includes: when the m^{th} second-type transmit port is determined as one of the K transmit ports, calculating the ratio of the received signal power of the m^{th} first-type transmit port to the received signal power of the m^{th} second-type transmit port as the power imbalance degree of one of the K transmit ports corresponding to the m^{th} group; when the m^{th} first-type transmit port is determined as one of the K transmit ports, calculating the ratio of the received signal power of the m^{th} second-type transmit port to the received signal power of the m^{th} first-type transmit port as the power imbalance degree of one of the K transmit ports corresponding to the m^{th} group, where m=1, ..., Q/2.

At operation S208, performing signal detection processing on the received signals, wherein the signal detection processing includes signal ignoring processing, which includes at least one of: ignoring signals received by a receive port, among the J receive ports, whose power imbalance degree is greater than a first preset threshold; or ignoring signals received by the P receive ports and transmitted by a transmit port, among the K transmit ports, whose power imbalance degree is greater than a second preset threshold.

It should be noted that specific implementations of the signal ignoring processing in the present disclosure include, but are not limited to, ignoring the signals of the corresponding port, treating the signals of said port as noise, setting the channel estimation value in the matrix corresponding to said port to zero, and deleting the said port from all ports.

In the above embodiments, when the power imbalance degree of a transmit port or a receive port exceeds the preset threshold and port redundancy exists (L is less than or equal to the smaller one of P and Q), the signals of the receive port or the transmit port which has a power imbalance degree exceeding the preset threshold are ignored during detection of the received signals, which simplifies channel estimation matrix, reduces processing complexity, and minimizes or avoids channel estimation error, thereby improving performance of the detection of the received signals.

In an exemplary embodiment, the precoding mode of the received signals is single-port, Q=1, L=1, a Maximum Ratio Combining (MRC) algorithm is adopted when performing the signal detection processing on the received signals, and the signal ignoring processing is: ignoring signals which are received by the receive port, among the J receive ports, whose power imbalance degree is greater than the first preset threshold.

In another exemplary embodiment, the precoding transmission mode of the received signals is spatial multiplexing, L>1, a Minimum Mean-Square Error (MMSE) algorithm or a Sphere Decoding (SD) algorithm is adopted when performing the signal detection processing on the received signals, and the signal ignoring processing includes: ignoring signals which are received by a receive port, among the J receive ports, whose power imbalance degree is greater than the first preset threshold; and ignoring signals which are received by the P receive ports and transmitted by the transmit port, among the K transmit ports, whose power imbalance degree is greater than the second preset threshold.

In yet another exemplary embodiment, the precoding transmission mode of the received signals is transmit diversity, L=1, and the signal ignoring processing includes: ignoring signals which are received which are by the receive port, among the J receive ports, whose power imbalance degree is greater than the first preset threshold; and ignoring signals which are received by the P receive ports and transmitted by the transmit port, among the K transmit ports, whose power imbalance degree is greater than the second preset threshold. Herein, for the receive port, among the J receive ports, whose power imbalance degree is greater than the first preset threshold, the MMSE algorithm or the SD algorithm is adopted when performing the signal detection processing on the received signals; or, for the transmit port, among the K transmit ports, whose power imbalance degree is greater than the second preset threshold, the MRC algorithm is adopted when performing the signal detection processing on the received signals.

In one example, for the m^{th} group of transmit ports (m=1, ..., Q/2), the following operations are performed.

When the received signal power of the m^{th} first-type transmit port is greater than that of the m^{th} second-type transmit port and the power imbalance degree of the m^{th} second-type transmit port is greater than the second preset threshold, the MRC algorithm is adopted for the signal detection processing to output ŝ₂ₘ₋₂ and ŝ₂ₘ₋₁ as detection results of the signal detection processing on s₂ₘ₋₂ and s₂ₘ₋₁.

When the received signal power of the m^{th} second-type transmit port is greater than that of the m^{th} first-type transmit port and the power imbalance degree of the m^{th} first-type transmit port is greater than the second preset threshold, the MRC algorithm is adopted in the signal detection processing to output results denoted as ŝ₍₂ₘ₋₂₎ₜₑₘₚ and ŝ₍₂ₘ₋₁₎ₜₑₘₚ, and then symbol transformation processing is performed on ŝ₍₂ₘ₋₂₎ₜₑₘₚ and ŝ₍₂ₘ₋₁₎ₜₑₘₚ to obtain ŝ₂ₘ₋₂ and ŝ₂ₘ₋₁ as detection results of the signal detection processing on s₂ₘ₋₂ and s₂ₘ₋₁, where ${\hat{s}}_{2 m - 2} = - {\hat{s}}_{\left(2m-2\right) temp}^{∗} ,$ ${\hat{s}}_{2 m - 1} = {\hat{s}}_{\left(2m-1\right) temp}^{∗} ,$ where $- {\hat{s}}_{\left(2m-2\right) temp}^{∗}$ represents multiplying the real part of ŝ₍₂ₘ₋₂₎ₜₑₘₚ by -1 (negation) while leaving the imaginary part unchanged; and ${\hat{s}}_{\left(2m-1\right) temp}^{∗}$ represents multiplying the imaginary part of ŝ₍₂ₘ₋₁₎ₜₑₘₚ by -1 (negation) while leaving the real part unchanged.

In the present embodiment, the precoding mode of the received signals is transmit diversity. When performing the signal detection processing on the received signals, an improved MRC detection method is adopted for the signals which are transmitted by the transmit port meeting the preset condition and received by the receive ports. That is, the detection result of the MRC algorithm is subjected to symbol transformation and then used as the final detection result. Compared with the conventional MMSE algorithm, the improved MRC algorithm has lower processing complexity, minimizes or avoids the impact of channel estimation errors, and achieves better detection performance than the MMSE detection method.

In addition, in an embodiment where the precoding transmission mode is transmit diversity, for a receive port among the J receive ports which has the power imbalance degree less than or equal to the first preset threshold or a transmit port, among the K transmit ports, whose power imbalance degree is less than or equal to the second preset threshold, the MMSE algorithm or the SD algorithm is adopted when performing the signal detection processing on the received signals.

An embodiment of the present disclosure further provides a signal detection apparatus for a MIMO system, and the apparatus is configured to implement the above method embodiments. The term "module" as used below may refer to any combination of software, hardware, and/or firmware that implements a predetermined function.

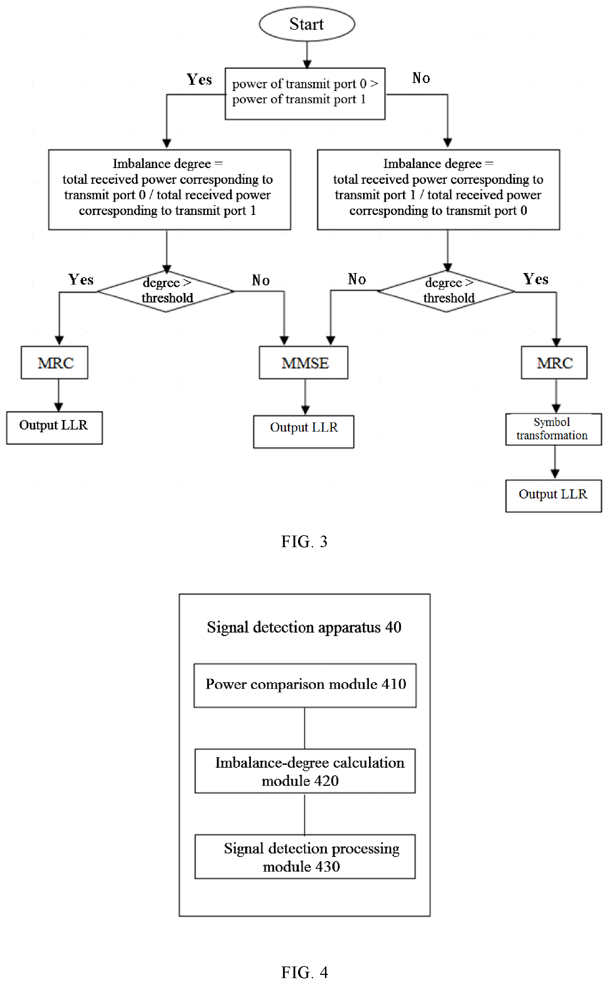

FIG. 4 is a block diagram of a signal detection apparatus for a MIMO system according to an embodiment of the present disclosure. In the MIMO system, signals from Q transmit ports are received by P receive ports, where P and Q are both positive integers.

As shown in FIG. 4, the signal detection apparatus 40 includes a power comparison module 410, an imbalance-degree calculation module 420, and a signal detection processing module 430.

The power comparison module 410 is configured to determine J receive ports having lower received signal power among the P receive ports, or K transmit ports having lower received signal power among the Q transmit ports, with L being the number of spatial multiplexing layers of the received signals, J≤P-L, and K≤Q-L.

The imbalance-degree calculation module 420 is configured to determine a power imbalance degree of each of the J receive ports or a power imbalance degree of each of the K transmit ports.

The signal detection processing module 430 is configured to perform signal detection processing on the received signals, wherein the signal detection processing performed on the received signals including signal ignoring processing, which includes at least one of: ignoring the signals which are received by a receive port, among the J receive ports, whose power imbalance degree is greater than a first preset threshold; or ignoring the signals which are received by the P receive ports and transmitted by a transmit port, among the K transmit ports, whose power imbalance degree is greater than a second preset threshold.

It should be noted that each of the above modules may be implemented by software, hardware, firmware or any combination thereof. For example, they can be implemented by, but not limited to: all modules being located in the same processor; or the modules being located in different processors in any combination.

In the above signal detection apparatus embodiments, the specific processing details of each module correspond completely to the various signal detection method embodiments described above, and will not be repeated here.

An embodiment of the present disclosure further provides a receiver, including the signal detection apparatus provided in the above apparatus embodiment.

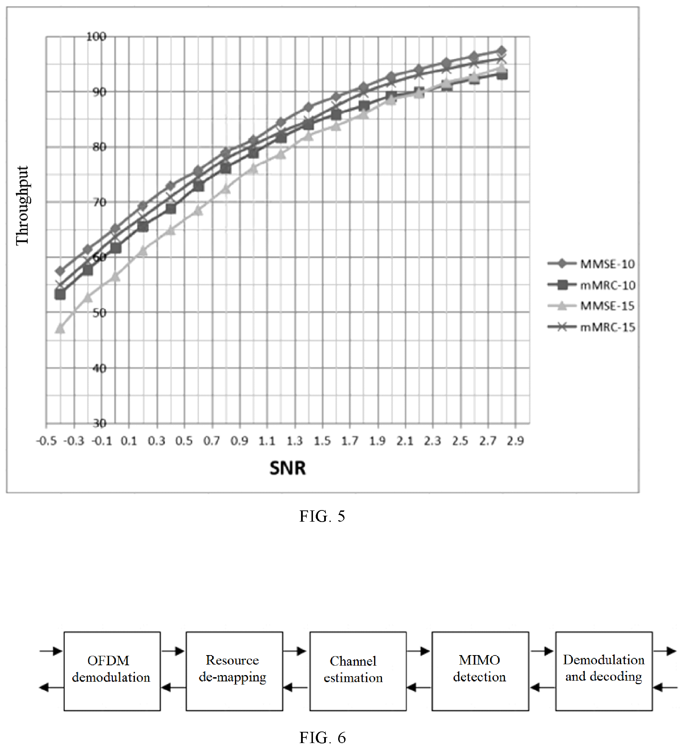

As shown in FIG. 6, in an exemplary embodiment, the workflow of the receiver includes: orthogonal frequency-division multiplexing (OFDM) demodulation, resource de-mapping, channel estimation, MIMO detection, and demodulation and decoding. The embodiments herein relate to the MIMO detection step.

An embodiment of the present disclosure further provides a computing device, including a processor, a memory, and a computer program which is stored in the memory and executable on the processor, and the processor executes the processing operations in any one of the above method embodiments.

In particular, the computing device may further include a transmission device and an input/output device, and the transmission device and the input/output device are both connected to the processor.

An embodiment of the present disclosure further provides a computer-readable storage medium, storing computer-executable instructions which, when executed by one or more processors, execute any one of the above embodiments of the signal detection method.

The computer-readable storage medium may store, but is not limited to, transitory or non-transitory storage media capable of storing computer programs, such as a Universal Serial Bus Flash Disk (a USB flash disk), a Read-Only Memory (ROM), a Random Access Memory (RAM), a mobile hard disk, a magnetic disk, and an optical disc.

Reference may be made to the examples described in the above embodiments and exemplary implementations for specific examples of the present embodiment, and thus the specific examples of the present embodiment will not be described in detail here.

Apparently, it should be understood by those of ordinary skill in the art that all the modules or operations of the present disclosure described above may be implemented by a general-purpose or dedicated computing device, may be integrated in a single computing device or distributed on a network composed of a plurality of computing devices. In one embodiment, all the modules or operations of the present disclosure described above may be implemented by program codes executable by a computing device, such that the modules or operations can be stored in a memory and executed by the computing device. In some cases, the operations illustrated or described may be performed in an order different from that described herein. In some other embodiments, the modules or operations may be separately made into integrated circuit modules, or some of the modules or operations may be made into a single integrated circuit module. Thus, the present disclosure is not limited to any specific combination of hardware, software or firmware.

In order to enable those of ordinary skill in the art to better understand the technical solutions of the present disclosure, the present disclosure is described below in conjunction with specific scenario embodiments.

### First Scenario Embodiment

Assume that in a MIMO system, transmit antenna ports are numbered q (q=0, 1, ..., Q), where Q is the number of transmit antenna ports, i.e., the number of transmit ports; and receiving antenna ports are numbered p (p=0, 1, ..., P), where P is the number of receive antennas, i.e., the number of receive ports. According to the 3GPP protocols, the received signal can be expressed as follows: $Y = HWS + N$ (1) where $Y = \left[\begin{matrix}{y}_{0} \\ {y}_{1} \\ : \\ {y}_{P}\end{matrix}\right]$, channel response matrix $H = \left[\begin{matrix}{h}_{00} & … & {h}_{0 Q} \\ … & … & … \\ {h}_{P 0} & … & {h}_{PQ}\end{matrix}\right]$, precoding matrix $W = \left[\begin{matrix}{w}_{00} & … & {w}_{0 L} \\ … & … & … \\ {w}_{Q 0} & … & {w}_{QL}\end{matrix}\right]$, transmission symbol (vector) $S = \left[\begin{matrix}{s}_{0} \\ {s}_{1} \\ : \\ {s}_{L}\end{matrix}\right]$, and noise $N = \left[\begin{matrix}{n}_{0} \\ {n}_{1} \\ : \\ {n}_{P}\end{matrix}\right]$. L is the number of spatial multiplexing layers, and L is equal to 1 in a case where the precoding transmission mode of the signals is single-port and in a case where the precoding transmission mode of the signals is transmit diversity.

In the embodiments of the present disclosure, a prerequisite for the MIMO system to perform the signal detection processing is L≤min(P,Q), where min(.) represents taking the smaller one of two values.

In the present scenario embodiment, Reference Signal Received Power (RSRP) is used as the parameter to measure the power imbalance degree, and RSRP_{pq} represents the reference signal power of transmit port q to receive port p. In practical applications, the reference factor for the power imbalance degree may also be the maximum power value of the receive port or the transmit port, etc.

In the present scenario embodiment, assuming that Q=4, P=4, and L=2. Here L>1 indicates that the precoding transmission mode of the signals is the spatial multiplexing. The received signal can be expressed as follows: $\left[\begin{matrix}{y}_{0} \\ {y}_{1} \\ {y}_{2} \\ {y}_{3}\end{matrix}\right] = \left[\begin{matrix}{h}_{00} & {h}_{01} & {h}_{02} & {h}_{03} \\ {h}_{10} & {h}_{11} & {h}_{12} & {h}_{13} \\ {h}_{20} & {h}_{21} & {h}_{22} & {h}_{23} \\ {h}_{30} & {h}_{31} & {h}_{32} & {h}_{33}\end{matrix}\right] \left[\begin{matrix}{w}_{00} & {w}_{01} \\ {w}_{10} & {w}_{11} \\ {w}_{20} & {w}_{21} \\ {w}_{30} & {w}_{31}\end{matrix}\right] \left[\begin{matrix}{s}_{0} \\ {s}_{1}\end{matrix}\right] + \left[\begin{matrix}{n}_{0} \\ {n}_{1} \\ {n}_{2} \\ {n}_{3}\end{matrix}\right]$ (2)

The MMSE algorithm or the SD algorithm may be adopted when performing MIMO detection with the signal detection method in the receiver. The MMSE detection method is adopted in the present scenario embodiment, and the detection formula in the MMSE detection method is as follows: $\hat{S} = {\left({H}_{e}^{′} {H}_{e}+N\right)}^{- 1} {H}_{e}^{′} Y$ (3) where Ŝ represents the soft decision value, i.e., Log-Likelihood Ratio (LLR) output, for the signal detection on signal S, Hₑ=HW, the superscript " ' " denotes conjugate transpose, and the superscript " ⁻¹ " denotes inversion operation.

For the transmit ports, Q>L and port redundancy of (Q-L)=2 exists at the transmitting end, that is, at most 2 transmit ports are possibly deleted in subsequent processing due to excessively low power. In the present scenario embodiment, deleting a transmit port, treating the transmitted signal of a transmit port as noise, or ignoring the transmitted signal all indicate deleting the corresponding transmit port, i.e., the transmit port no longer participates in subsequent MIMO detection processing.

The sum of the RSRPs for each transmit port q to all the receive ports is represented as U_{q} = (|RSRP_{0q}| + |RSRP_{1q}|+...+|RSRP_{pq}|), and the sums are sorted in descending order. Assume that U₀ and U₁ are the relatively smaller sums among the 4 transmit ports, the power imbalance degree is calculated by the following expressions: ${ρ}_{0}^{T} = min \left(\frac{{U}_{2}}{{U}_{0}}, \frac{{U}_{3}}{{U}_{0}}\right)$ (4a) ${ρ}_{1}^{T} = min \left(\frac{{U}_{2}}{{U}_{1}}, \frac{{U}_{3}}{{U}_{1}}\right)$ (4b)

When ${ρ}_{q}^{T} \geq TH$, TH being the first preset threshold, for example, both transmit port 0 and transmit port 1 meet the condition, the signals from transmit port 0 and transmit port 1 are much weaker than the noise according to formula (2). Consequently, the errors in the channel estimation values corresponding to transmit ports 0 and 1 will be significant, degrading the performance of the MMSE detection processing according to formula (3). The corresponding transmit ports may be deleted in the subsequent processing, and formula (2) for the MIMO detection process may be simplified as follows: $\left[\begin{matrix}{y}_{0} \\ {y}_{1} \\ {y}_{2} \\ {y}_{3}\end{matrix}\right] = \left[\begin{matrix}{h}_{02} & {h}_{03} \\ {h}_{12} & {h}_{13} \\ {h}_{22} & {h}_{23} \\ {h}_{32} & {h}_{33}\end{matrix}\right] \left[\begin{matrix}{w}_{20} & {w}_{21} \\ {w}_{30} & {w}_{31}\end{matrix}\right] \left[\begin{matrix}{s}_{0} \\ {s}_{1}\end{matrix}\right] + \left[\begin{matrix}{n}_{0} \\ {n}_{1} \\ {n}_{2} \\ {n}_{3}\end{matrix}\right]$ (5)

Thus, Hₑ in formula (3) is simplified, and introduction of large channel estimation errors is avoided, thereby ensuring signal detection performance.

Similarly, assume that for the receive port, P>L and port redundancy of (P-L)=2 exists, that is, up to 2 receive ports are possibly deleted in subsequent processing due to excessively low received signal power. The sum of the RSRPs for each receive port p from all transmit ports is represented as: Vₚ = (|RSRPₚ₀| + |RSRPₚ₁|+...+|RSRP_{pQ}|, and the sums are sorted in descending order. Assume that V₀ and V₁ are the relatively smaller sums among the 4 receive ports, the power imbalance degree is calculated by the following expressions: ${ρ}_{0}^{R} = min \left(\frac{{V}_{2}}{{V}_{0}}, \frac{{V}_{3}}{{V}_{0}}\right)$ (6a) ${ρ}_{1}^{R} = min \left(\frac{{V}_{2}}{{V}_{1}}, \frac{{V}_{3}}{{V}_{1}}\right)$ (6b)

When ${ρ}_{q}^{T} \geq TH$, TH being the second preset threshold, for example, both receive port 0 and receive port 1 meet the condition, then these two receive ports can be detected in the subsequent processing, and formula (2) for the MIMO detection process is converted into the following formula: $\left[\begin{matrix}{y}_{2} \\ {y}_{3}\end{matrix}\right] = \left[\begin{matrix}{h}_{20} & {h}_{21} & {h}_{22} & {h}_{23} \\ {h}_{30} & {h}_{31} & {h}_{32} & {h}_{33}\end{matrix}\right] \left[\begin{matrix}{w}_{00} & {w}_{01} \\ {w}_{10} & {w}_{11} \\ {w}_{20} & {w}_{21} \\ {w}_{20} & {w}_{31}\end{matrix}\right] \left[\begin{matrix}{s}_{0} \\ {s}_{1}\end{matrix}\right] + \left[\begin{matrix}{n}_{2} \\ {n}_{3}\end{matrix}\right]$ (7)

Thus, Hₑ in formula (3) is simplified, and channel estimation errors are avoided to ensure the signal detection performance.

Taking both the number of transmit ports and the number of receive ports into consideration, as long as L<P or L<Q, redundancy exists in all the ports, and when the power imbalance degree of a transmit port exceeds the first preset threshold or the power imbalance degree of a receive port exceeds the second preset threshold, the signals of the channel corresponding to the port will be ignored, that is, the port will be deleted.

### Second Scenario Embodiment

Assume that in a MIMO system, transmit ports are numbered q (q=0, 1, ..., Q), where Q is the number of transmit ports; receive ports are numbered p (p=0, 1, ..., P), where P is the number of receive ports. According to the 3GPP protocols, the received signal is still expressed by formula (1): $Y = HWS + N$ (1) where $Y = \left[\begin{matrix}{y}_{0} \\ {y}_{1} \\ : \\ {y}_{P}\end{matrix}\right]$, channel response matrix $H = \left[\begin{matrix}{h}_{00} & … & {h}_{0 Q} \\ … & … & … \\ {h}_{P 0} & … & {h}_{PQ}\end{matrix}\right]$, precoding matrix $W = \left[\begin{matrix}{w}_{00} & … & {w}_{0 L} \\ … & … & … \\ {w}_{Q 0} & … & {w}_{QL}\end{matrix}\right]$, transmission symbol $S = \left[\begin{matrix}{s}_{0} \\ {s}_{1} \\ : \\ {s}_{L}\end{matrix}\right]$, and noise $N = \left[\begin{matrix}{n}_{0} \\ {n}_{1} \\ : \\ {n}_{P}\end{matrix}\right]$. L is the number of spatial multiplexing layers, and L is equal to 1 in a case where the precoding transmission mode of the signals is single-port and in a case where the precoding transmission mode of the signals is transmit diversity. The prerequisite for the MIMO system to perform detection is L≤min(P,Q), where min(.) represents taking the smaller one of two values.

It is assumed that RSRP is used as the parameter to measure the power imbalance degree of the port, and RSRP_{pq} represents the reference signal power of transmit port q to receive port p.

In the present scenario embodiment, assume that the precoding transmission mode of the received signals is single-port, Q=1 and L=1. If L<P, there are only cases where a receive port is deleted when its corresponding power imbalance degree exceeds a preset threshold.

Assume that the number of receive ports is 4, P>L, and port redundancy of (P-L)=3 exists, that is, up to 3 receive ports are possibly deleted in subsequent processing due to excessively low received signal power. The sum of the RSRPs for each receive port p from all transmit ports is represented as Vₚ = |RSRPₚ₀|, and the sums are sorted in descending order. Assume that V₀ and V₁ are the relatively smaller sums among the 4 receive ports, the power imbalance degree is calculated by adopting the expressions the same as formulas (6a) and (6b): ${ρ}_{0}^{R} = min \left(\frac{{V}_{2}}{{V}_{0}}, \frac{{V}_{3}}{{V}_{0}}\right)$ (6a) ${ρ}_{1}^{R} = min \left(\frac{{V}_{2}}{{V}_{1}}, \frac{{V}_{3}}{{V}_{1}}\right)$ (6b)

When ${ρ}_{q}^{T} \geq TH$, TH being the second preset threshold, for example, both receive port 0 and receive port 1 meet the condition, then these two receive ports can be detected in the subsequent processing, and formula (2) for the MIMO detection process may be converted into the following formula: $\left[\begin{matrix}{y}_{2} \\ {y}_{3}\end{matrix}\right] = \left[\begin{matrix}{h}_{20} \\ {h}_{30}\end{matrix}\right] \left[{w}_{00}\right] \left[{s}_{0}\right] + \left[\begin{matrix}{n}_{2} \\ {n}_{3}\end{matrix}\right]$ (8)

Thus, Hₑ in formula (3) is simplified, and channel estimation errors are avoided to ensure signal detection performance.

### Third Scenario Embodiment

Assume that in a MIMO system, transmit ports are numbered q (q=0, 1, ..., Q), where Q is the number of transmit ports; and receive ports are numbered p (p=0, 1, ..., P), where P is the number of receive ports. According to the 3GPP protocols, the received signal is still expressed by formula (1): $Y = HWS + N$ (1) where $Y = \left[\begin{matrix}{y}_{0} \\ {y}_{1} \\ : \\ {y}_{P}\end{matrix}\right]$, channel response matrix $H = \left[\begin{matrix}{h}_{00} & … & {h}_{0 Q} \\ … & … & … \\ {h}_{P 0} & … & {h}_{PQ}\end{matrix}\right]$, precoding matrix $W = \left[\begin{matrix}{w}_{00} & … & {w}_{0 L} \\ … & … & … \\ {w}_{Q 0} & … & {w}_{QL}\end{matrix}\right]$, transmission symbol $S = \left[\begin{matrix}{s}_{0} \\ {s}_{1} \\ : \\ {s}_{L}\end{matrix}\right]$, and noise $N = \left[\begin{matrix}{n}_{0} \\ {n}_{1} \\ : \\ {n}_{P}\end{matrix}\right]$. L is the number of spatial multiplexing layers, and L is equal to 1 in a case where the precoding transmission mode of the signals is single-port and in a case where the precoding transmission mode of the signals is transmit diversity. The prerequisite for the MIMO system to perform detection is L≤min(P,Q), where min(.) represents taking the smaller one of two values.

It is assumed that RSRP is used as the parameter to measure the power imbalance degree of the port, and RSRP_{pq} represents the reference signal power of transmit port q to receive port p.

In the present scenario embodiment, assume that the precoding transmission mode of the received signals is transmit diversity and L=1. For the receive ports, if L<P, a case where a receive port is deleted because the power imbalance degree thereof exceeds the preset threshold exists. The signal detection process performed on the receive ports in this case is the same as the case where the precoding transmission mode of the received signals is single-port as described in the second scenario embodiment, and thus will not be described here.

For the transmit ports, according to the 3GPP protocols, there are two cases where the number of transmit ports is 2 and 4, respectively.

In a case where the number of transmit ports is 2, as shown in FIG. 3, the two transmit ports include a first-type transmit port (transmit port 0) and a second-type transmit port (transmit port 1), and when the received signal power of transmit port 0 is greater than that of transmit port 1, the ratio of the sum of RSRPs of transmit port 0 to the sum of RSRPs of transmit port 1 is calculated as the power imbalance degree of the group of ports; when the calculated power imbalance degree is greater than the preset threshold, MRC signal detection is performed on this group of transmit ports, and corresponding LLR results are output; when the calculated power imbalance degree is less than the preset threshold, MMSE signal detection is performed on this group of transmit ports, and corresponding LLR results are output. When the received signal power of transmit port 0 is less than that of transmit port 1, the ratio of the sum of the RSRPs of transmit port 1 to the sum of the RSRPs of transmit port 0 is calculated as the power imbalance degree of this group of ports; when the calculated power imbalance degree is greater than the preset threshold, MRC signal detection is performed on this group of transmit ports, symbol transformation processing is performed on the calculation results, and final LLR results are output; and when the calculated power imbalance degree is less than the preset threshold, MMSE signal detection is performed on this group of transmit ports, and LLR results are output.

Transmit port 0 and transmit port 1 transmit S₀ and $- {s}_{1}^{∗}$ on the 2i^{th} subcarrier, and transmit S₁ and ${s}_{0}^{∗}$ on the (2i+1)^{th} subcarrier (for the WIFI protocol, this refers to 2 adjacent symbols). The received signal is represented as follows: $\left[\begin{matrix}{y}_{0} \left(2i\right) \\ {y}_{1} \left(2i\right) \\ {y}_{0}^{∗} \left(2i+1\right) \\ {y}_{1}^{∗} \left(2i+1\right)\end{matrix}\right] = \left[\begin{matrix}{h}_{00} \left(2i\right) & - {h}_{01} \left(2i\right) \\ {h}_{10} \left(2i\right) & - {h}_{11} \left(2i\right) \\ {h}_{01}^{∗} \left(2i+1\right) & {h}_{00}^{∗} \left(2i+1\right) \\ {h}_{11}^{∗} \left(2i+1\right) & {h}_{10}^{∗} \left(2i+1\right)\end{matrix}\right] \left[\begin{matrix}{s}_{0} \\ {s}_{1}^{∗}\end{matrix}\right] + \left[\begin{matrix}{n}_{0} \left(2i\right) \\ {n}_{1} \left(2i\right) \\ {n}_{0}^{∗} \left(2i+1\right) \\ {n}_{1}^{∗} \left(2i+1\right)\end{matrix}\right]$ (9)

Here, the received signals at receive port p (p=0, 1) on the 2i^{th} subcarrier and the (2i+1)^{th} subcarrier are yₚ(2i) and yₚ(2i+1) respectively; the channel estimation values from transmit port q (q=0, 1) to receive port p (p=0, 1) on the 2i^{th} subcarrier and the (2i+1)^{th} subcarrier are h_{pq}(2i) and h_{pq}(2i+1) respectively; noises at receive port p (p=0, 1) on the 2i^{th} subcarrier and the (2i+1)^{th} subcarrier are nₚ(2i) and nₚ(2i+1) respectively. The superscript " * " denotes conjugation. The conventional method for processing transmit diversity in the receiver is the MMSE detection method: $\hat{S} = {\left(H′H+N\right)}^{- 1} H ′ Y$ (10) where Ŝ represents an LLR output of the signal detection on S, the superscript " ' " denotes conjugate transpose, and the superscript " ⁻¹ " denotes inversion operation.

When the transmit power of the transmit ports are unbalanced, if the received signal power of transmit port 0 is greater than that of transmit port 1, the imbalance degree is as follows: ${ρ}_{1}^{T} = \left(\left|{RSRP}_{00}\right|+\left|{RSRP}_{10}\right|\right) / \left(\left|{RSRP}_{01}\right|+\left|{RSRP}_{11}\right|\right)$ (11)

When ${ρ}_{1}^{T} < TH$, TH being the preset threshold, the MMSE detection performed by formula (10) is still adopted; when ${ρ}_{1}^{T} \geq TH$, the signals from transmit port 1 are much weaker than noise according to formula (9). Consequently, the error in the channel estimation value corresponding to transmit port 1 will be significant, and using the MMSE detection of formula (10) will cause performance degradation. If the channel estimation value related to transmit port 1 is set to 0, the formula of the received signal may be converted into the following formula: $\left[\begin{matrix}{y}_{0} \left(2i\right) \\ {y}_{1} \left(2i\right) \\ {y}_{0}^{∗} \left(2i+1\right) \\ {y}_{1}^{∗} \left(2i+1\right)\end{matrix}\right] = \left[\begin{matrix}{h}_{00} \left(2i\right) & 0 \\ {h}_{10} \left(2i\right) & 0 \\ 0 & {h}_{00}^{∗} \left(2i+1\right) \\ 0 & {h}_{10}^{∗} \left(2i+1\right)\end{matrix}\right] \left[\begin{matrix}{s}_{0} \\ {s}_{1}^{∗}\end{matrix}\right] + \left[\begin{matrix}{n}_{0} \left(2i\right) \\ {n}_{1} \left(2i\right) \\ {n}_{0}^{∗} \left(2i+1\right) \\ {n}_{1}^{∗} \left(2i+1\right)\end{matrix}\right]$ (12)

That is, merely a single port, i.e., transmit port 0, transmits the signals, and the received signal on the 2i^{th} subcarrier can be expressed as follows: $\left[\begin{matrix}{y}_{0} \left(2i\right) \\ {y}_{1} \left(2i\right)\end{matrix}\right] = \left[\begin{matrix}{h}_{00} \left(2i\right) \\ {h}_{10} \left(2i\right)\end{matrix}\right] {s}_{0} + \left[\begin{matrix}{n}_{0} \left(2i\right) \\ {n}_{1} \left(2i\right)\end{matrix}\right]$ (13a)

The received signal on the (2i+1)^{th} subcarrier can be expressed as follows: $\left[\begin{matrix}{y}_{0} \left(2i+1\right) \\ {y}_{1} \left(2i+1\right)\end{matrix}\right] = \left[\begin{matrix}{h}_{00} \left(2i+1\right) \\ {h}_{10} \left(2i+1\right)\end{matrix}\right] {s}_{1} + \left[\begin{matrix}{n}_{0} \left(2i+1\right) \\ {n}_{1} \left(2i+1\right)\end{matrix}\right]$ (13b)

Then, the performance can be improved by adopting the simpler MRC and treating the signals from transmit port 1 as noise. That is, the detection method can be expressed as: ${\hat{s}}_{0} = \left[{h}_{00}^{∗}\left(2i\right) {h}_{10}^{∗}\left(2i\right)\right] \left[\begin{matrix}{y}_{0} \left(2i\right) \\ {y}_{1} \left(2i\right)\end{matrix}\right] = \left({\left|{h}_{00}\left(2i\right)\right|}^{2}+{\left|{h}_{10}\left(2i\right)\right|}^{2}\right) {s}_{0} + \left[\begin{matrix}{n}_{0}^{′} \left(2i\right) \\ {n}_{1}^{′} \left(2i\right)\end{matrix}\right]$ (14a) $\begin{matrix}{\hat{s}}_{1} = \left[{h}_{00}^{∗}\left(2i+1\right){h}_{10}^{∗}\left(2i+1\right)\right] \left[\begin{matrix}{y}_{0} \left(2i+1\right) \\ {y}_{1} \left(2i+1\right)\end{matrix}\right] \\ = \left({\left|{h}_{00}\left(2i+1\right)\right|}^{2}+{\left|{h}_{10}\left(2i+1\right)\right|}^{2}\right) {s}_{1} + \left[\begin{matrix}{n}_{0}^{′} \left(2i+1\right) \\ {n}_{1}^{′} \left(2i+1\right)\end{matrix}\right]\end{matrix}$ where ŝ₀ and ŝ₁ are the respective LLR results of the signal detection on S₀ and S₁, and the results are output in sequence.

Similarly, if the received signal power of transmit port 0 is less than or equal to that of transmit port 1, the imbalance degree is as follows: ${ρ}_{0}^{T} = \left(\left|{RSRP}_{01}\right|+\left|{RSRP}_{11}\right|\right) / \left(\left|{RSRP}_{00}\right|+\left|{RSRP}_{10}\right|\right)$ (15)

When ${ρ}_{0}^{T} < TH$, TH being the preset threshold, the MMSE detection performed by formula (10) is still adopted; when ${ρ}_{0}^{T} \geq TH$, the channel estimate value corresponding to transmit port 0 may be set to 0, and the formula of the received signal may be converted into the following formula: $\left[\begin{matrix}{y}_{0} \left(2i\right) \\ {y}_{1} \left(2i\right) \\ {y}_{0}^{∗} \left(2i+1\right) \\ {y}_{1}^{∗} \left(2i+1\right)\end{matrix}\right] = \left[\begin{matrix}0 & - {h}_{01} \left(2i\right) \\ 0 & - {h}_{11} \left(2i\right) \\ {h}_{01}^{∗} \left(2i+1\right) & 0 \\ {h}_{11}^{∗} \left(2i+1\right) & 0\end{matrix}\right] \left[\begin{matrix}{s}_{0} \\ {s}_{1}^{∗}\end{matrix}\right] + \left[\begin{matrix}{n}_{0} \left(2i\right) \\ {n}_{1} \left(2i\right) \\ {n}_{0}^{∗} \left(2i+1\right) \\ {n}_{1}^{∗} \left(2i+1\right)\end{matrix}\right]$ (16)

That is, merely a single port, i.e., transmit port 1, transmits the signals, and the received signal on the 2i^{th} subcarrier can be expressed as follows: $\left[\begin{matrix}{y}_{0} \left(2i\right) \\ {y}_{1} \left(2i\right)\end{matrix}\right] = - \left[\begin{matrix}{h}_{01} \left(2i\right) \\ {h}_{11} \left(2i\right)\end{matrix}\right] {s}_{1}^{∗} + \left[\begin{matrix}{n}_{0} \left(2i\right) \\ {n}_{1} \left(2i\right)\end{matrix}\right]$ (17a)

The received signal on the (2i+1)^{th} subcarrier can be expressed as follows: $\left[\begin{matrix}{y}_{0} \left(2i+1\right) \\ {y}_{1} \left(2i+1\right)\end{matrix}\right] = \left[\begin{matrix}{h}_{00} \left(2i+1\right) \\ {h}_{10} \left(2i+1\right)\end{matrix}\right] {s}_{0}^{∗} + \left[\begin{matrix}{n}_{0} \left(2i+1\right) \\ {n}_{1} \left(2i+1\right)\end{matrix}\right]$ (17b)

Then, the MRC is adopted first, the signals of transmit port 0 are treated as noise, and the detection method can be expressed as follows: $\begin{matrix}{\hat{s}}_{0 temp} = \left[{h}_{01}^{∗}\left(2i+1\right){h}_{11}^{∗}\left(2i+1\right)\right] \left[\begin{matrix}{y}_{0} \left(2i+1\right) \\ {y}_{1} \left(2i+1\right)\end{matrix}\right] \\ = \left({\left|{h}_{01}\left(2i+1\right)\right|}^{2}+{\left|{h}_{11}\left(2i+1\right)\right|}^{2}\right) {s}_{0}^{∗} + \left[\begin{matrix}{n}_{0}^{′} \left(2i+1\right) \\ {n}_{1}^{′} \left(2i+1\right)\end{matrix}\right]\end{matrix}$ (18a) ${\hat{s}}_{1 temp} = \left[{h}_{01}^{∗}\left(2i\right) {h}_{11}^{∗}\left(2i\right)\right] \left[\begin{matrix}{y}_{0} \left(2i\right) \\ {y}_{1} \left(2i\right)\end{matrix}\right] = - \left({\left|{h}_{01}\left(2i\right)\right|}^{2}+{\left|{h}_{11}\left(2i\right)\right|}^{2}\right) {s}_{1}^{∗} + \left[\begin{matrix}{n}_{0}^{′} \left(2i\right) \\ {n}_{1}^{′} \left(2i\right)\end{matrix}\right]$ (18b)

Then, symbol transformation processing is performed on the results as follows: ${\hat{s}}_{0} = - {\hat{s}}_{0 temp}^{∗}$ (19a) ${\hat{s}}_{1} = {\hat{s}}_{1 temp}^{∗}$ (19b) where ŝ₀ and ŝ₁ are respective LLR outputs of signal detection on S₀ and S₁. The operation by formula (18a) corresponds to multiplying the real part of ŝ₍₂ₘ₋₂₎ₜₑₘₚ by -1 (negation), while leaving the imaginary part unchanged; and the operation by formula (19b) corresponds to multiplying the imaginary part of ŝ_{(2m -1)temp} by -1 (negation), while leaving the real part unchanged. In the present embodiment, the methods of formula (14), formula (18), and formula (19) are collectively referred to as the improved MRC detection method.

In a case where the number of transmit ports is 4, the ports are numbered as port 0, port 1, port 2, and port 3; ports 0 and 2 are grouped into a first group, ports 1 and 3 are grouped into a second group, the process illustrated by FIG. 3 is performed on each group of ports, and LLR results of the corresponding groups are output respectively.

Assuming that the number of receive ports is 2, according to the 3GPP protocols, transmit port 0 and transmit port 2 transmit S₀ and $- {s}_{1}^{∗}$ on the 4i^{th} subcarrier, and transmit S₁ and ${s}_{0}^{∗}$ on the (4i+1)^{th} subcarrier; transmit port 1 and transmit port 3 transmit S₂ and $- {s}_{3}^{∗}$ on the (4i+2)^{th} subcarrier, and transmit S₃ and ${s}_{1}^{∗}$ on the (4i+3)^{th} subcarrier, and the received signal is expressed as follows: $\left[\begin{matrix}{y}_{0} \left(4i\right) \\ {y}_{1} \left(4i\right) \\ {y}_{0}^{∗} \left(4i+1\right) \\ {y}_{1}^{∗} \left(4i+1\right) \\ {y}_{0} \left(4i+2\right) \\ {y}_{1} \left(4i+2\right) \\ {y}_{0}^{∗} \left(4i+3\right) \\ {y}_{1}^{∗} \left(4i+3\right)\end{matrix}\right] = \left[\begin{matrix}{h}_{00} \left(4i\right) & - {h}_{02} \left(4i\right) & 0 & 0 \\ {h}_{10} \left(4i\right) & - {h}_{12} \left(4i\right) & 0 & 0 \\ {h}_{02}^{∗} \left(4i+1\right) & {h}_{00}^{∗} \left(4i+1\right) & 0 & 0 \\ {h}_{12}^{∗} \left(4i+1\right) & {h}_{10}^{∗} \left(4i+1\right) & 0 & 0 \\ 0 & 0 & {h}_{01} \left(4i+2\right) & - {h}_{03} \left(4i+2\right) \\ 0 & 0 & {h}_{11} \left(4i+2\right) & - {h}_{13} \left(4i+2\right) \\ 0 & 0 & {h}_{03}^{∗} \left(4i+3\right) & {h}_{01}^{∗} \left(4i+3\right) \\ 0 & 0 & {h}_{13}^{∗} \left(4i+3\right) & {h}_{11}^{∗} \left(4i+3\right)\end{matrix}\right] \left[\begin{matrix}{s}_{0} \\ {s}_{2}^{∗} \\ {s}_{1} \\ {s}_{3}^{∗}\end{matrix}\right] + \left[\begin{matrix}{n}_{0} \left(4i\right) \\ {n}_{1} \left(4i\right) \\ {n}_{0}^{∗} \left(4i+1\right) \\ {n}_{1}^{∗} \left(4i+1\right) \\ {n}_{0} \left(4i+2\right) \\ {n}_{1} \left(4i+2\right) \\ {n}_{0}^{∗} \left(4i+3\right) \\ {n}_{1}^{∗} \left(4i+3\right)\end{matrix}\right]$ (20)

Transmit ports 0 and 2 are treated as one group, transmit ports 1 and 3 are treated as another group, the processing in each group is similar to the method adopted in the case where the number of transmit ports is 2, and the conventional method is to perform MMSE detection according to the formula (10).

Taking the group of transmit ports 0 and 2 as an example, if the power of transmit port 0 is greater than that of transmit port 2, the imbalance degree parameter is as follows: ${ρ}_{2}^{T} = \left(\left|{RSRP}_{00}\right|+\left|{RSRP}_{10}\right|\right) / \left(\left|{RSRP}_{02}\right|+\left|{RSRP}_{12}\right|\right)$ (21)

When ${ρ}_{2}^{T} < TH$, TH being the preset threshold, the MMSE detection of formula (10) is still adopted; when ${ρ}_{2}^{T} \geq TH$, the simpler MRC is adopted, the signals of transmit port 2 are treated as noise, and the detection method is as follows: ${\hat{s}}_{0} = \left[{h}_{00}^{∗}\left(4i\right) {h}_{10}^{∗}\left(4i\right)\right] \left[\begin{matrix}{y}_{0} \left(4i\right) \\ {y}_{1} \left(4i\right)\end{matrix}\right] = \left({\left|{h}_{00}\left(4i\right)\right|}^{2}+{\left|{h}_{10}\left(4i\right)\right|}^{2}\right) {s}_{0} + \left[\begin{matrix}{n}_{0}^{′} \left(4i\right) \\ {n}_{1}^{′} \left(4i\right)\end{matrix}\right]$ (22a) $\begin{matrix}{\hat{s}}_{1} = \left[{h}_{00}^{∗}\left(4i+1\right){h}_{10}^{∗}\left(4i+1\right)\right] \left[\begin{matrix}{y}_{0} \left(4i+1\right) \\ {y}_{1} \left(4i+1\right)\end{matrix}\right] \\ = \left({\left|{h}_{00}\left(4i+1\right)\right|}^{2}+{\left|{h}_{10}\left(4i+1\right)\right|}^{2}\right) {s}_{1} + \left[\begin{matrix}{n}_{0}^{′} \left(4i+1\right) \\ {n}_{1}^{′} \left(4i+1\right)\end{matrix}\right]\end{matrix}$ (22) where ŝ₀ and ŝ₁ are respective LLR outputs of S₀ and S₁.

If the received signal power of the transmit port 0 is less than or equal to that of the transmit port 2, the imbalance degree parameter is as follows: ${ρ}_{0}^{T} = \left(\left|{RSRP}_{02}\right|+\left|{RSRP}_{12}\right|\right) / \left(\left|{RSRP}_{00}\right|+\left|{RSRP}_{10}\right|\right)$ (23)

When ${ρ}_{0}^{T} < TH$, TH being the preset threshold, the MMSE detection performed by formula (10) is still adopted; when ${ρ}_{0}^{T} \geq TH$, the MRC is adopted first, and the signals of transmit port 0 are treated as noise, that is, the detection method can be expressed as follows: $\begin{matrix}{\hat{s}}_{0 temp} = \left[{h}_{02}^{∗}\left(4i+1\right){h}_{12}^{∗}\left(4i+1\right)\right] \left[\begin{matrix}{y}_{0} \left(4i+1\right) \\ {y}_{1} \left(4i+1\right)\end{matrix}\right] \\ = \left({\left|{h}_{02}\left(4i+1\right)\right|}^{2}+{\left|{h}_{12}\left(4i+1\right)\right|}^{2}\right) {s}_{0}^{∗} + \left[\begin{matrix}{n}_{0}^{′} \left(4i+1\right) \\ {n}_{1}^{′} \left(4i+1\right)\end{matrix}\right]\end{matrix}$ (24a) ${\hat{s}}_{1 temp} = \left[{h}_{02}^{∗}\left(4i\right) {h}_{12}^{∗}\left(4i\right)\right] \left[\begin{matrix}{y}_{0} \left(4i\right) \\ {y}_{1} \left(4i\right)\end{matrix}\right] = - \left({\left|{h}_{02}\left(4i\right)\right|}^{2}+{\left|{h}_{12}\left(4i\right)\right|}^{2}\right) {s}_{1}^{∗} + \left[\begin{matrix}{n}_{0}^{′} \left(4i\right) \\ {n}_{1}^{′} \left(4i\right)\end{matrix}\right]$ (24b)

Then, symbol transformation processing is performed as follows: ${\hat{s}}_{0} = - {\hat{s}}_{0 temp}^{∗}$ (25a) ${\hat{s}}_{1} = {\hat{s}}_{1 temp}^{∗}$ [Equation 13](25b) where ŝ₀ and ŝ₁ are respective LLR outputs of S₀ and S₁. The processing for transmit ports 1 and 3 is performed similarly to obtain LLR outputs, i.e., ŝ₂ and ŝ₃.

The embodiments of the present application tested the detection performance of LTE-A transmit diversity under 3GPP for imbalance degrees of 10 dB and 15 dB. Referring to FIG. 5, when the imbalance degree is 10dB, the performance of the MMSE detection is better than that of the improved MRC detection method; when the imbalance degree is 15dB, the performance of the improved MRC detection method is better than that of the MMSE detection. Assuming that the imbalance degree is increased from 10dB to 15dB by a spacing step of 1dB, the signal-to-noise ratios (dB) desired for the receiver system provided in the present embodiment to achieve 90% throughput are counted and listed in Table 1. It can be seen that threshold TH=12dB is taken as a boundary point between the performance of the MMSE detection and that of the improved MRC detection method.

**Table 1**

| | | | | | | |
|---|---|---|---|---|---|---|
| Imbalance degree (dB) | 10 | 11 | 12 | 13 | 14 | 15 |
| Conventional MMSE | 1.7 | 1.9 | 2.1 | 2.2 | 2.3 | 2.4 |
| Method of the present disclosure | 2.3 | 2.2 | 2.1 | 2.0 | 1.9 | 1.8 |

In summary, the signal detection method and apparatus for the MIMO system, the receiver, and the computer-readable storage medium provided in the present disclosure solve the problem that when the power imbalance between different transmit ports and different receive ports corresponding to the receiver reaches a certain level, continuing to use conventional receiver detection methods designed for power-balanced conditions affects detection performance, and achieve possible superior performance while reducing the processing complexity. The signal detection method mainly considers three factors: the precoding transmission mode of the signals received by the receive ports from the transmit ports, the power imbalance degrees of the receive ports, and the power imbalance degrees of the transmit ports. Based on these three factors, corresponding receive ports or transmit ports are subject to port deletion or signal ignoring processing.

What is described above is merely preferable embodiments of the present disclosure, but is not intended to limit the present disclosure. Various modifications and changes may be made to the present disclosure by those of ordinary skill in the art. Any modification, equivalent replacement and improvement made within the principle of the present disclosure should be included in the scope of the present disclosure.

## Claims

1. A signal detection method for a multiple input multiple output system, comprising:
receiving signals from Q transmit ports by P receive ports, where P and Q are both positive integers;
in a case where L is less than or equal to a smaller one of P and Q, determining J receive ports having lower received signal power among the P receive ports or K transmit ports having lower received signal power among the Q transmit ports, where L is a number of spatial multiplexing layers of the received signals, J≤P-L, and K≤Q-L;
determining a power imbalance degree of each receive port of the J receive ports or a power imbalance degree of each transmit port of the K transmit ports; and
performing signal detection processing on the received signals, wherein the signal detection processing comprises signal ignoring processing, and the signal ignoring processing comprises at least one of:
ignoring signals which are received by a receive port, among the J receive ports, whose power imbalance degree is greater than a first preset threshold; or
ignoring signals which are received by the P receive ports and transmitted by a transmit port, among the K transmit ports, whose power imbalance degree is greater than a second preset threshold.

2. The signal detection method of claim 1, wherein
a precoding mode of the received signals is single-port, Q=1, L=1, a Maximum Ratio Combining, MRC, algorithm is adopted when performing the signal detection processing on the received signals, and the signal ignoring processing is: ignoring the signals which are received by the receive port among the J receive ports, whose power imbalance degree is greater than the first preset threshold.

3. The signal detection method of claim 1, wherein
a precoding transmission mode of the received signals is spatial multiplexing, L>1, a Minimum Mean-Square Error, MMSE, algorithm or a Sphere Decoding, SD, algorithm is adopted when performing the signal detection processing on the received signals, and the signal ignoring processing comprises: ignoring the signals which are received by the receive port, among the J receive ports, whose power imbalance degree is greater than the first preset threshold; and ignoring the signals which are received by the P receive ports and transmitted by the transmit port, among the K transmit ports, whose power imbalance degree is greater than the second preset threshold.

4. The signal detection method of claim 1, wherein a precoding transmission mode of the received signals is transmit diversity, L=1, and the signal ignoring processing comprises: ignoring the signals which are received by the receive port, among the J receive ports, whose power imbalance degree is greater than the first preset threshold; and ignoring the signals which are received by the P receive ports and transmitted by the transmit port, among the K transmit ports, whose power imbalance degree is greater than the second preset threshold, wherein
for the receive port, among the J receive ports, whose power imbalance degree is greater than the first preset threshold, an MMSE algorithm or an SD algorithm is adopted when performing the signal detection processing on the received signals; or
for the transmit port, among the K transmit ports, whose power imbalance degree is greater than the second preset threshold, an MRC algorithm is adopted when performing the signal detection processing on the received signals.

5. The signal detection method of claim 1, wherein a precoding transmission mode of the received signals is transmit diversity, L=1, the Q transmit ports comprise Q/2 first-type transmit ports and Q/2 second-type transmit ports, and an m^{th} first-type transmit port and an m^{th} second-type transmit port respectively transmit signal s₂ₘ₋₂ and signal $- {s}_{2 m - 1}^{∗}$ on a (Q·i+2m-2)^{th} subcarrier, and respectively transmit signal s₂ₘ₋₁ and signal ${s}_{2 m - 2}^{∗}$ on a (Q·i+2m-1)^{th} subcarrier, wherein the m^{th} first-type transmit port and the m^{th} second-type transmit port are regarded as an m^{th} group of transmit ports, m=1, ..., Q/2, and i is a positive integer, and wherein the determining the K transmit ports having the lower received signal power among the Q transmit ports comprises:
for the m^{th} group of transmit ports, when a received signal power of the m^{th} first-type transmit port is greater than a received signal power of the m^{th} second-type transmit port, determining the m^{th} second-type transmit port as one of the K transmit ports; and
for the m^{th} group of transmit ports, when the received signal power of the m^{th} second-type transmit port is greater than the received signal power of the m^{th} first-type transmit port, determining the m^{th} first-type transmit port as one of the K transmit ports.

6. The signal detection method of claim 5, wherein
for the m^{th} group of transmit ports, when the received signal power of the m^{th} first-type transmit port is greater than the received signal power of the m^{th} second-type transmit port and the power imbalance degree of the m^{th} second-type transmit port is greater than the second preset threshold, an MRC algorithm is adopted for the signal detection processing to output ŝ₂ₘ₋₂ and ŝ₂ₘ₋₁;
for the m^{th} group of transmit ports, when the received signal power of the m^{th} second-type transmit port is greater than the received signal power of the m^{th} first-type transmit port and the power imbalance degree of the m^{th} first-type transmit port is greater than the second preset threshold, the MRC algorithm is adopted for the signal detection processing to output ŝ₍₂ₘ₋₂₎ₜₑₘₚ and ŝ₍₂ₘ₋₁₎ₜₑₘₚ, and the signal detection processing further comprises:
performing a symbol transformation processing on (2m-2)temp and ŝ₍₂ₘ₋₁₎ₜₑₘₚ to obtain ŝ₂ₘ₋₂ and ŝ₂ₘ₋₁, wherein ${\hat{s}}_{2 m - 2} = - {\hat{s}}_{\left(2m-2\right) temp}^{∗} ,$ ${\hat{s}}_{2 m - 1} = {\hat{s}}_{\left(2m-1\right) temp}^{∗} ,$
where ŝ₂ₘ₋₂ and ŝ₂ₘ₋₁ represent detection results of the signal detection processing on s₂ₘ₋₂ and s₂ₘ₋₁, respective, $- {\hat{s}}_{\left(2m-2\right) temp}^{∗}$ represents multiplying a real part of ŝ₍₂ₘ₋₂₎ₜₑₘₚ by -1 while leaving an imaginary part unchanged; and ${\hat{s}}_{\left(2m-1\right) temp}^{∗}$ represents multiplying a real part of ŝ₍₂ₘ₋₁₎ₜₑₘₚ by -1 while leaving an imaginary part unchanged.

7. The signal detection method of claim 1, wherein a precoding mode of the received signals is single-port or spatial multiplexing,
the determining the J receive ports having the lower received signal power among the P receive ports comprises:
comparing the received signal power of the P receive ports, and sorting the P receive ports in descending order of received signal power; and
determining the last J receive ports in the sorted order as the J receive ports having the lower received signal power among the P receive ports; and
the determining the K transmit ports having the lower received signal power among the Q transmit ports comprises:
comparing the received signal power of the Q transmit ports, and sorting the Q transmit ports in descending order of received signal power; and
determining the last K transmit ports in the sorted order as the K transmit ports having the lower received signal power among the Q transmit ports.

8. The signal detection method of claim 1, wherein a precoding mode of the received signals is transmit diversity, and
the determining the J receive ports having the lower received signal power among the P receive ports comprises:
comparing the received signal power of the P receive ports, and sorting the P receive ports in descending order of received signal power; and
determining the last J receive ports in the sorted order as the J receive ports having the lower received signal power among the P receive ports.

9. The signal detection method of any one of claims 1 to 8, wherein the received signal power of the P receive ports and the received signal power of the Q transmit ports are determined as follows:
for each receive port of the P receive ports, calculating total power of signals received by the receive port from the Q transmit ports as the received signal power of the receive port; and
for each transmit port of the Q transmit ports, calculating total power of signals received by the P receive ports from the transmit port as the received signal power of the transmit port.

10. The signal detection method of any one of claims 1 to 9, wherein
the determining the power imbalance degree of each receive port of the J receive ports comprises:
selecting all or part of the receive ports from the P receive ports other than the J receive ports as comparison receive ports;
for each receive port of the J receive ports, calculating a ratio of the received signal power of the receive port to the received signal power of each of the comparison receive ports, and taking a minimum ratio as the power imbalance degree of the receive port; and
the determining the power imbalance degree of each transmit port of the K transmit ports comprises:
selecting all or part of the transmit ports from the Q transmit ports other than the K transmit ports as comparison transmit ports; and
for each transmit port of the K transmit ports, calculating a ratio of the received signal power of the transmit port to the received signal power of each of the comparison transmit ports, and taking a minimum ratio as the power imbalance degree of the transmit port.

11. The signal detection method of claim 10, wherein when a precoding transmission mode of the received signals is single-port or spatial multiplexing,
the selecting all or part of the receive ports in the P receive ports other than the J receive ports as the comparison receive ports comprises:
selecting all the receive ports in the P receive ports other than the J receive ports as the comparison receive ports; and
the selecting all or part of the transmit ports from the Q transmit ports other than the K transmit ports as the comparison transmit ports comprises:
selecting all the transmit ports from the Q transmit ports other than the K transmit ports as the comparison receive ports.

12. The signal detection method of claim 10, wherein when a precoding mode of the received signals is transmit diversity:
the selecting all or part of the receive ports from the P receive ports other than the J receive ports as the comparison receive ports comprises:
selecting all the receive ports from the P receive ports other than the J receive ports as the comparison receive ports.

13. The signal detection method of claim 5, wherein determining the power imbalance degree of each transmit port of the K transmit ports comprises:
when the m^{th} second-type transmit port is determined as one of the K transmit ports, calculating a ratio of the received signal power of the m^{th} first-type transmit port to the received signal power of the m^{th} second-type transmit port as the power imbalance degree of one of the K transmit ports corresponding to the m^{th} group;
when the m^{th} first-type transmit port is determined as one of the K transmit ports, calculating a ratio of the received signal power of the m^{th} second-type transmit port to the received signal power of the m^{th} first-type transmit port as the power imbalance degree of one of the K transmit ports corresponding to the m^{th} group,
wherein m=1, ..., Q/2.

14. The signal detection method of claim 5, wherein a value of Q is 2 or 4 when the precoding transmission mode of the received signals is transmit diversity.

15. The signal detection method of claim 4, wherein
for a receive port in the J receive ports which has the power imbalance degree less than or equal to the first preset threshold or a transmit port, among the K transmit ports, whose power imbalance degree is less than or equal to the second preset threshold, the MMSE algorithm or the SD algorithm is adopted when performing the signal detection processing on the received signals.

16. A signal detection apparatus for a MIMO system in which signals from Q transmit ports are received by P receive ports, where P and Q are both positive integers, wherein the signal detection apparatus comprises:
a power comparison module, which is configured to determine J receive ports having lower received signal power among the P receive ports or K transmit ports having lower received signal power among the Q transmit ports, where L is a number of spatial multiplexing layers of the received signals, J≤P-L, and K≤Q-L;
an imbalance-degree calculation module, which is configured to determine a power imbalance degree of each receive port of the J receive ports or a power imbalance degree of each transmit port of the K transmit ports; and
a signal detection processing module, which is configured to perform signal detection processing on the received signals, wherein the signal detection processing performed on the received signals comprises signal ignoring processing, and the signal ignoring processing comprises at least one of:
ignoring the signals which are received by a receive port, among the J receive ports, whose power imbalance degree is greater than a first preset threshold; or
ignoring the signals which are received by the P receive ports and transmitted by a transmit port, among the K transmit ports, whose power imbalance degree is greater than a second preset threshold.

17. A receiver, comprising the signal detection apparatus of claim 16.

18. A computing device, comprising a processor, a memory, and a computer program which is stored in the memory and executable on the processor, wherein the processor, when executing the computer program, implements the signal detection method of any one of claims 1 to 15.

19. A computer-readable storage medium, storing computer-executable instructions which, when executed by one or more processors, implement the signal detection method of any one of claims 1 to 15.
